# EUROPEAN PATENT APPLICATION

(11) **EP 1 353 216 A1**
(43) Date of publication of application: **15.10.2003**
(21) Application number: 01900766.5
(22) Date of filing: 15.01.2001
(51) Int. Cl.: G02F 1/1335

(54) **LCD DEVICE AND LCD PANEL**

(71) Applicant: MITSUBISHI DENKI KABUSHIKI KAISHA, Tokyo 100-8310 (JP)
(72) Inventor: TAMAKI, Yasuyuki, Chiyoda-ku, Tokyo 100-8310 (JP)
(74) Representative: Sajda, Wolf E., Dipl.-Phys.
(86) International application number: JP0100201
(87) International publication number: WO02056102

(57) **Abstract**

A liquid crystal display device and a liquid crystal panel which can improve a display property are obtained. A liquid crystal display device (1) includes an active matrix type liquid crystal panel (7) holding liquid crystal, a window member (3) located on liquid crystal panel (7) and transmitting light (26, 27a, 27b) emitted from liquid crystal panel (7), and a diffusion member (19) located between liquid crystal (42) of liquid crystal panel (7) and window member (3) and diffusing light (26) emitted from liquid crystal (42).

## Description

### Technical Field

The present invention relates to a liquid crystal display device and a liquid crystal panel and, more particularly, to a liquid crystal display device and a liquid crystal panel that can prevent a degradation of display quality.

### Background Art

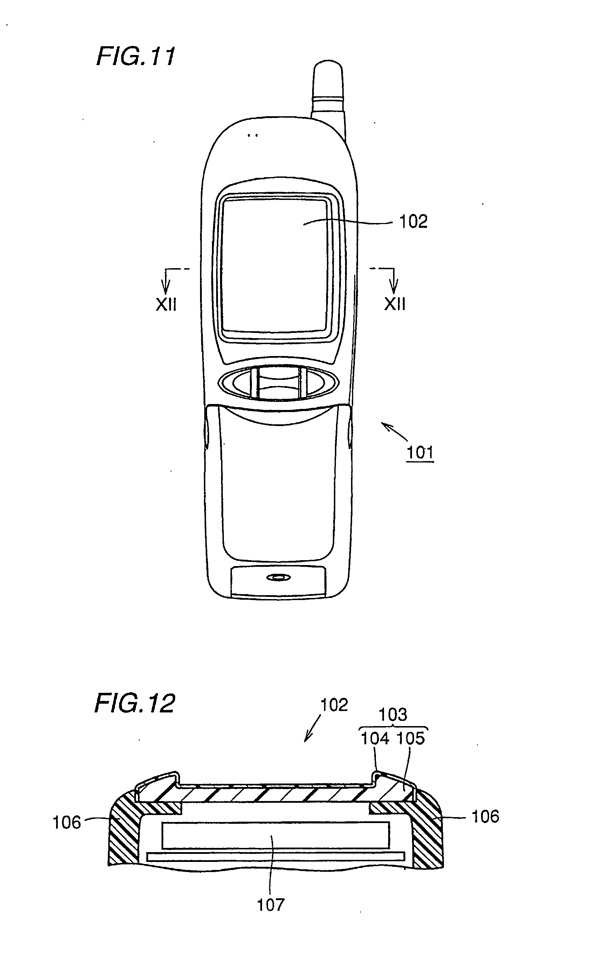

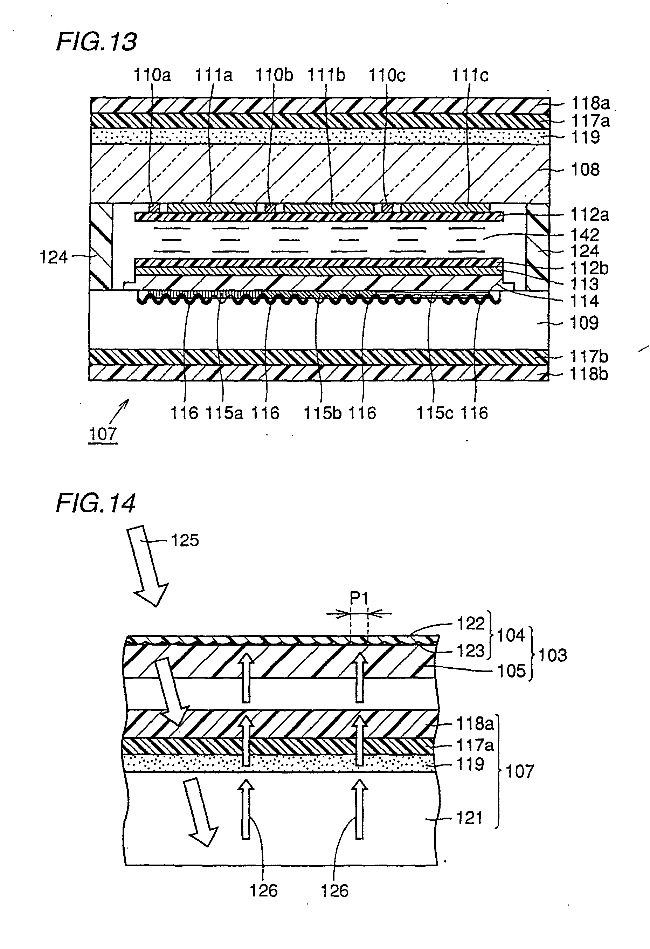

In these days, mobile equipment such as a mobile phone is widely used. Fig. 11 schematically shows a conventional mobile phone. Fig. 12 schematically shows a part of a cross section taken along the line XII-XII in Fig. 11. Fig. 13 schematically shows a cross section of a liquid crystal panel used in the mobile phone shown in Fig. 12. Fig. 14 is a schematic cross-sectional view showing a mechanism of displaying an image or the like on an LCD portion 102 of the mobile phone shown in Figs. 11-13.

A conventional mobile phone will be described with reference to Figs. 11-14.

Referring to Figs. 11-14, a conventional mobile phone 101 includes an LCD (Liquid Crystal Display) portion 102, a receiver located on an upper portion of a body of mobile phone 101, a microphone located on a lower portion of the body, and an input portion for an input operation. The receiver transmits to a user a voice of a person the user is speaking to. The microphone is used for a voice input by a user. LCD portion 102 is for a variable display of any kind of information, for example, text information such as a list of telephone numbers or an e-mail, or video information such as an image. In addition, an antenna is located on the upper portion of the body.

A liquid crystal panel 107 is used in LCD portion 102, as shown in Fig. 12. Liquid crystal panel 107 is held in a casing of mobile phone 101 formed of a front case 106 and a rear case (not shown). An opening is formed in front case 106 in a region above an emitting surface of liquid crystal panel 107 from which light is emitted. An in-molded part 103 is arranged to cover the opening. In-molded part 103 is formed of a plastic molded part 105 and an in-mold film 104 arranged on a surface of plastic molded part 105. In-mold film 104 is a multilayer film and, as shown in Fig. 14, includes a peel layer 123 located on a surface of plastic molded part 105 and an in-mold film top layer 122 located on peel layer 123. In-molded part 103 is produced with a so-called in-mold method. This is a method to produce an in-molded part which is an integrated product of plastic molded part 105 and in-mold film 104 by one shot, through the step of setting an in-mold film for the purpose of, for example, decoration or function enhancement inside a mold used for plastic molding upon a plastic molding process, and then performing a plastic molding process. Such in-molded part 103 is adopted as means for enhancing a degree of freedom in designing mobile phone 101 while preventing an increase in a production cost.

An active matrix type liquid crystal panel has come to be used as liquid crystal panel 107 to obtain high display quality. An exemplary structure of such active matrix type liquid crystal panel 107 will be described with reference to Fig. 13.

Referring to Fig. 13, liquid crystal panel 107 is a semipermeable type color liquid crystal panel. In liquid crystal panel 107, a substrate 108 of a transparent material such as glass having an element such as a thin film field effect transistor, a switching element for controlling a display at each pixel of a liquid crystal, formed on its surface and a CF (Color Filter) substrate 109 having color filters 115a-115c arranged on a surface thereof, are arranged opposite to each other to sandwich a liquid crystal 142 therebetween. Data lines 110a-110c which are conductive lines for controlling the switching element, and transparent electrodes 111a-111c for applying an electric field to liquid crystal 142 are arranged on a surface of substrate 108 that faces liquid crystal 142. An orientation film 112a is formed on surfaces of data lines 110a-110c and transparent electrodes 111a-111c that face liquid crystal 142.

A reflection film 116 for reflecting light incoming from an emitting surface of liquid crystal panel 107 is formed on a surface of CF substrate 109 that faces liquid crystal 142. Color filters 115a-115c are arranged on reflection film 116. Color filters 115a-115c are the filters of red, green and blue colors, respectively. An overcoat film 114 is arranged on color filters 115a-115c. A transparent electrode 113 as an opposite electrode is arranged on overcoat film 114. An orientation film 112b is arranged on transparent electrode 113.

Liquid crystal 142 is held between orientation films 112a and 112b. In addition, a seal material for holding liquid crystal 142 is arranged between substrate 108 and CF substrate 109.

A phase difference plate (λ/4 plate) 117a is fixed on a surface of the emitting surface side of the substrate in liquid crystal panel 107 with an adhesion layer 119 interposed therebetween. A polarizer 118a is arranged on phase difference plate 117a. In addition, a phase difference plate (λ/4 plate) 117b is fixed on that surface of CF substrate 109, which is opposite to the surface facing liquid crystal 142, with an adhesion layer (not shown) interposed therebetween. A polarizer 118b is arranged on that surface of phase difference plate 117b which is opposite to the surface facing CF substrate 109.

A mechanism of displaying an image on LCD portion 102 of mobile phone 101 will be described with reference to Fig. 14.

Referring to Fig. 14, in LCD portion 102 of mobile phone 101, an incident light 125 which enters liquid crystal panel 107 via in-molded part 103 comes into liquid crystal panel 107 from an emitting surface of liquid crystal panel 107 (a surface facing to in-molded part 103). Incident light 125 is then reflected by reflection film 116 on a substrate portion 121 of liquid crystal panel 107. The reflected light (reflected light 126) proceeds from substrate portion 121 through adhesion layer 119, phase difference plate 117a and polarizer 118a, and is emitted from the emitting surface of liquid crystal panel 107. Reflected light 126 then exits the LCD portion of mobile phone 101 via in-molded part 103. Reflected light 126 is colored by color filters 115a-115c. Furthermore, an optical property of liquid crystal 142 can vary by altering a potential of each of transparent electrodes 111a-111c by the switching element to modify an intensity, a direction or the like of an electric field applied to liquid crystal 142. As a result, it is possible to switch between the states transmitting and not transmitting reflected light 126 of liquid crystal 142. Therefore, by controlling the switching element corresponding to each pixel so as to display a prescribed character or image, a prescribed character or image can be displayed on LCD portion 102.

The inventor found a following problem occurring in the LCD portion of the conventional mobile phone as described above. That is, in conventional mobile phone 101 described with reference to Figs. 11-14, small light spots are sometimes seen all over the display surface in a liquid crystal display of LCD portion 102, in addition to an image originally displayed on the emitting surface of liquid crystal panel 107 (hereafter, such small light spots generated will be called a glare.) Such glare is especially seen when the environment is dark, for example, when mobile phone 101 is used in the dark. Display quality of LCD portion 102 has been lowered by a generation of this glare. In addition, as it is expected that a user uses a mobile terminal such as mobile phone 101 under various conditions, the use of a mobile phone in the dark environment as mentioned above is supposed to be common. Therefore, the generation of such glare is a serious problem which causes a degradation of the display quality of LCD portion 102 of mobile phone 101.

The present invention aims to solve the problem as described above. A purpose of the present invention is to provide a liquid crystal display device and a liquid crystal panel which can improve the display property.

### Disclosure of the Invention

The inventor accomplished the present invention by studying and finding a cause of the above-described glare generation. The inventor thoroughly examined a structure of a mobile phone as a liquid crystal display device generating a glare. As a result, a very small inequality formed on peel layer 123 of in-mold film 104 constructing in-molded part 103 of mobile phone 101 was found as shown in Fig. 14. A pitch P1 of this inequality was approximately 0.2 mm to 0.4 mm. It is probable that this inequality of peel layer 123 was formed by a transfer of an inequality shape formed on a surface of a drum around which in-mold film 104 was coiled during a photogravure of in-mold film 104 prior to perform the in-mold method.

Meanwhile, a pitch of the pixels of liquid crystal panel 107 is now approximately 0.2 mm to 0.3 mm to attain a high resolution of liquid crystal panel 107. In addition, reflected light 126 from liquid crystal panel 107 has an intensity distribution with a pitch corresponding to the pitch of the pixels. Therefore, the pitch of the intensity distribution of reflected light 126 will be nearly the same size as the pitch P1 of the inequality of peel layer 123. As a result, the glare is generated by an interference of the inequality of peel layer 123 of in-mold film 104 with reflected light 126 (that is, the glare is regarded as an unevenness of an interference of reflected light 126 with the inequality of peel layer 123.)

Based on the findings of the inventor, a liquid crystal display device in accordance with one aspect of the present invention includes an active matrix type liquid crystal panel holding liquid crystal, a window member located on the liquid crystal panel and transmitting light emitted from the liquid crystal panel, and a diffusion member located between the liquid crystal of the liquid crystal panel and the window member and diffusing light emitted from the liquid crystal.

The light emitted from the liquid crystal panel has an intensity distribution corresponding to the pixel pitch of the liquid crystal panel. In addition, by diffusing the light emitted from the liquid crystal of the liquid crystal panel to some degree by the diffusion member, a leveling of the intensity distribution corresponding to the pixel pitch of the liquid crystal panel is possible for the light emitted from the liquid crystal panel. With this, if an inequality with a pitch similar to the pixel pitch is formed in a light transmitting portion of the window member (if, for example, an inequality with a pitch similar to the pixel pitch is formed on an in-mold film constructing an in-molded part when the in-molded part or the like is used as the window member), an interference of the light emitted from the liquid crystal panel with the inequality formed on the window member as mentioned above can be suppressed. Therefore, as the generation of the so-called glare can be prevented, degradation of display quality of the liquid crystal display device can be prevented.

The generation of the glare can also be prevented by using an in-molded part or the like for the window member as mentioned above. Therefore, the degree of freedom in designing a liquid crystal display device can be enhanced while keeping high display quality of the liquid crystal display device by applying the in-molded part or the like to the window member.

In the liquid crystal display device in the aspect mentioned above, it is preferred that the diffusion member includes a base material which can transmit light, and a light diffusion material which is arranged dispersed in the base material.

By this approach, a light diffusion property of the diffusion member can be changed arbitrarily by modifying a size of the light diffusion material dispersed in the base material and a distribution density of the light diffusion material in the base material. With this, in the liquid crystal display device, an optical property of the diffusion member can be set to diffuse the light emitted from the liquid crystal panel so as to decrease the glare without significantly degrading the high display quality of the active matrix type liquid crystal panel.

In the liquid crystal display device in the aspect mentioned above, it is preferred that the liquid crystal panel includes first and second substrates holding the liquid crystal. The first substrate may be located on the emitting surface side of the liquid crystal panel that emits light, while the second substrate may be located in a region at a larger distance from the emitting surface than the first substrate when seen from the liquid crystal. Furthermore, the liquid crystal panel may include an optical member arranged on that surface of the first substrate which is opposite to the surface facing the liquid crystal. The diffusion member may be located between the first substrate and the optical member.

By this approach, the diffusion member can be integrated in the liquid crystal panel. With this, in a liquid crystal display device formed of members such as a liquid crystal panel and a casing integrating the liquid crystal panel, it is unnecessary to significantly modify the design of the members other than the liquid crystal panel, such as the casing. Therefore, by using the liquid crystal panel having the diffusion member, the design of the members, such as the casing, of the conventional liquid crystal display device can easily be applied to the liquid crystal display device of the present invention. Consequently, a designing time period for the members such as the casing to realize the liquid crystal display device of the present invention can be shortened, so that the production cost of the liquid crystal display device of the present invention is not increased.

In the liquid crystal display device in the aspect mentioned above, it is preferred that the diffusion member is an adhesion layer that adheres the optical member to the first substrate.

The adhesion layer that adheres the optical member to the first substrate also exists in the conventional liquid crystal panel. Thus, the shape of the liquid crystal panel similar to that of the conventional one can be attained by adding a function of a diffusion member to the existing adhesion layer. As a result, except for the liquid crystal panel of the liquid crystal display device, almost the same members as the conventional ones can be used. Therefore, the designing cost to realize the liquid crystal display device of the present invention can further be decreased.

In the liquid crystal display device in the aspect mentioned above, a preferred haze value of the diffusion member is between 50 % and 60 %.

In this example, if the haze value of the diffusion member is in the range mentioned above, the generation of the glare can be prevented in the liquid crystal display device by appropriately diffusing the light emitted from the liquid crystal panel while maintaining the high display quality of the active matrix type liquid crystal panel. It is to be noted that, a haze value of the diffusion member is represented as a ratio of diffuse transmitted light to total transmitted light when visible light is emitted to the diffusion member: a haze value = (diffuse transmittance)/(total light beam transmittance) x 100 (%).

A liquid crystal panel in accordance with another aspect of the present invention is an active matrix type liquid crystal panel holding liquid crystal, and includes first and second substrates holding liquid crystal. The first substrate is located on an emitting surface side of the liquid crystal panel that emits light, while the second substrate is located in a region at a larger distance from the emitting surface than the first substrate when seen from the liquid crystal. Furthermore, the liquid crystal panel includes an optical member arranged on that surface of the first substrate which is opposite to the surface facing the liquid crystal, and a diffusion member located between the first substrate and the optical member.

As described above, the light emitted from the liquid crystal panel has an intensity distribution corresponding to the pixel pitch of the liquid crystal panel. In addition, by diffusing the light emitted from the liquid crystal of the liquid crystal panel (emitted light) to some degree by the diffusion member, a leveling of the intensity distribution corresponding to the pixel pitch of the liquid crystal panel is possible for the light emitted from the liquid crystal panel. Assuming that a window member or the like is arranged on the emitting surface of the liquid crystal panel. If an inequality with a pitch similar to the pixel pitch is formed in a portion of the window member which transmits light emitted from the liquid crystal panel (if, for example, an inequality with a pitch similar to the pixel pitch is formed on an in-mold film constructing an in-molded part when the in-molded part or the like is used as the window member), an interference of the light emitted from the liquid crystal panel with the inequality formed on the window member can be suppressed because the intensity distribution of the emitted light is leveled. Therefore, as the generation of the so-called glare can be prevented, degradation of display quality of the liquid crystal panel can be prevented.

In the liquid crystal panel in the another aspect mentioned above, it is preferred that the diffusion member includes a base material which can transmit light, and a light diffusion material which is arranged dispersed in the base material.

By this approach, a light diffusion property of the diffusion member can be changed arbitrarily by modifying a size of the light diffusion material dispersed in the base material and a distribution density of the light diffusion material in the base material. With this, an optical property of the diffusion member can be set to diffuse the light emitted from the liquid crystal panel so as to decrease the glare without significantly degrading the high display quality of the active matrix type liquid crystal panel.

In the liquid crystal panel in the another aspect mentioned above, it is preferred that the diffusion member is an adhesion layer that adheres the optical member to the first substrate.

As mentioned above, the adhesion layer that adheres the optical member to the first substrate also exists in the conventional liquid crystal panel. Thus, the shape of the liquid crystal panel similar to that of the conventional one can be attained by adding a function of a diffusion member to the existing adhesion layer. As a result, in the liquid crystal display device having an integrated liquid crystal panel, almost the same members as the conventional ones can be used except for the liquid crystal panel. Therefore, the designing cost to realize the liquid crystal display device using the liquid crystal panel according to the present invention can further be decreased.

In the liquid crystal panel in the another aspect mentioned above, a preferred haze value of the diffusion member is between 50 % and 60 %.

In this example, if the haze value of the diffusion member is in the range mentioned above, an interference of the light emitted from the liquid crystal panel with the inequality formed on the window member can be prevented by appropriately diffusing the light emitted from the liquid crystal panel while maintaining the high display quality of the active matrix type liquid crystal panel, even if the window member having an inequality with a pitch similar to the pixel pitch of the liquid crystal panel formed thereon (such as the window member formed of an in-molded part having an in-mold film including an inequality) is arranged on the emitting surface of the liquid crystal panel.

A liquid crystal display device in accordance with another aspect of the present invention includes an active matrix type liquid crystal panel, a frame member located on the liquid crystal panel and having an opening formed in a region located above an emitting surface of the liquid crystal panel which emits light, and a window member located to cover the opening of the frame member and transmitting light emitted from the emitting surface of the liquid crystal panel. In the window member, the region that transmits light emitted from the emitting surface of the liquid crystal panel is formed of a single layer of transparent material.

As described above, the light emitted from the emitting surface of the liquid crystal panel has an intensity distribution corresponding to the pixel pitch of the liquid crystal panel. In addition, in the liquid crystal display device in the above-mentioned aspect of the present invention, as the region transmitting light emitted from the emitting surface of the liquid crystal panel is formed of a single layer of transparent material, the region does not have a multilayer structure as an in-molded part in which an in-mold film is arranged on a surface of a plastic molded part. Therefore, there is no phenomenon such as an interference of the inequality formed on the in-mold film with the light emitted from the emitting surface of the liquid crystal panel. This surely prevents the generation of the so-called glare. Thus, degradation of a display property of the liquid crystal display device by the glare can surely be prevented.

In addition, as the frame member is included besides the window member, the degree of freedom in designing the liquid crystal display device can be enhanced by arbitrarily changing the design of the frame member while keeping the good display property.

A liquid crystal display device in accordance with another aspect of the present invention includes an active matrix type liquid crystal panel, a casing arranged to surround the liquid crystal panel and having an opening formed in a region facing an emitting surface of the liquid crystal panel which emits light, and a window member located to cover the opening of the casing and transmitting light emitted from the emitting surface of the liquid crystal panel. In the window member, the region that transmits light emitted from a display surface of the liquid crystal panel is formed of a single layer of transparent material.

As described above, the light emitted from the emitting surface of the liquid crystal panel has an intensity distribution corresponding to the pixel pitch of the liquid crystal panel. In addition, in the liquid crystal display device in the above-mentioned aspect of the present invention, as the region transmitting light emitted from the emitting surface of the liquid crystal panel is formed of a single layer of transparent material, the region does not have a multilayer structure as an in-molded part in which an in-mold film is arranged on a surface of a plastic molded part. Therefore, there is no phenomenon such as an interference of the inequality formed on the in-mold film with the light emitted from the emitting surface of the liquid crystal panel. This surely prevents the generation of the so-called glare. Thus, degradation of a display property of the liquid crystal display device by the glare can be prevented.

In the liquid crystal display device in the aspect mentioned above, the window member may include a colored layer formed on a surface of a region other than the region that transmits light emitted from the display surface of the liquid crystal panel.

By this approach, an arbitrary design can be provided to the window member by forming the colored layer of an arbitrary color and form on the window member.

### Brief Description of the Drawings

Fig. 1 is a schematic view showing a first embodiment of a mobile phone as a liquid crystal display device according to the present invention.
Fig. 2 is a schematic partial cross-section with respect to the line II-II in Fig. 1.
Fig. 3 is a schematic cross-sectional view of a liquid crystal panel used in the mobile phone shown in Fig. 2.
Fig. 4 is a schematic cross-sectional view showing a mechanism of displaying an image or the like on an LCD portion of the mobile phone shown in Figs. 1-3.
Fig. 5 is a schematic partial cross-section showing a second embodiment of a mobile phone according to the present invention.
Fig. 6 is a schematic partial plan view showing an LCD portion of the mobile phone shown in Fig. 5.
Fig. 7 is an exploded perspective view of an LCD window member in the LCD portion of the mobile phone shown in Fig. 5.
Fig. 8 is a schematic cross-sectional view showing a first modification of the second embodiment of the mobile phone according to the present invention shown in Figs. 5-7.
Fig. 9 is a schematic partial cross-section showing a second modification of the second embodiment of the mobile phone according to the present invention shown in Figs. 5-7.
Fig. 10 is a schematic partial plan view showing an LCD portion of the mobile phone shown in Fig. 9.
Fig. 11 is a schematic view showing a conventional mobile phone.
Fig. 12 is a schematic partial cross-section with respect to the line XII-XII in Fig. 11.
Fig. 13 is a schematic cross-sectional view of a liquid crystal panel used in the mobile phone shown in Fig. 12.
Fig. 14 is a schematic cross-sectional view showing a mechanism of displaying an image or the like on an LCD portion of the mobile phone shown in Figs. 11-13.

### Best Modes for Carrying Out the Invention

Embodiments of the present invention will now be described with reference to the drawings. It is to be noted that, the same reference character indicates the same or the corresponding portion and the description thereof will not be repeated.

### (First Embodiment)

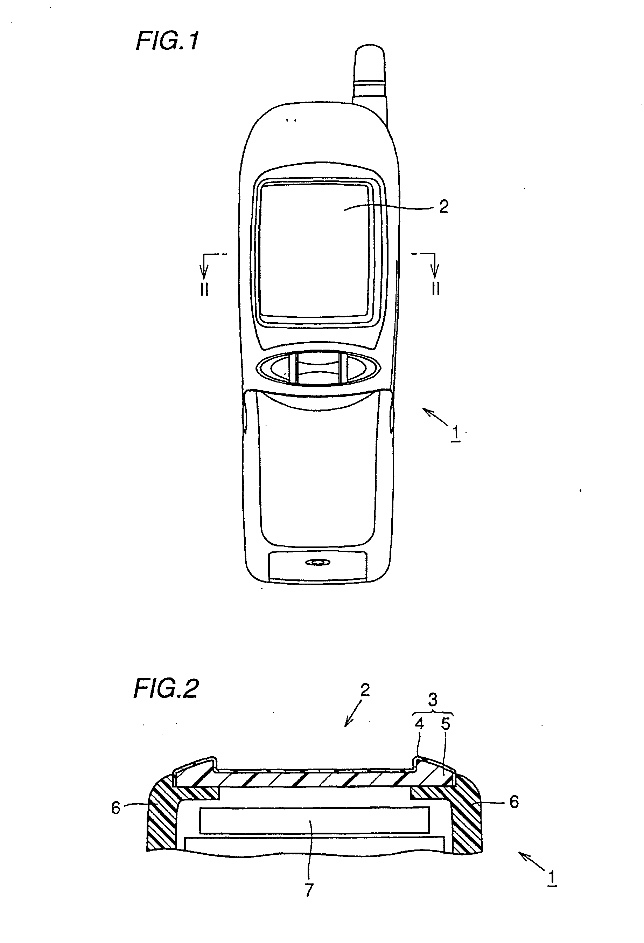

A first embodiment of a mobile phone according to the present invention will be described with reference to Figs. 1-4.

Referring to Figs. 1-4, a mobile phone 1 includes an LCD (Liquid Crystal Display) portion 2, a receiver located on an upper portion of a body of mobile phone 1, a microphone located on a lower portion of the body, and an input portion for an input operation. The receiver transmits to a user a voice of a person the user is speaking to. The microphone is used for a voice input by a user. LCD portion 2 is for a variable display of any kind of information, for example, text information such as a list of telephone numbers or an e-mail, or video information such as an image. In addition, an antenna is located on the upper portion of the body.

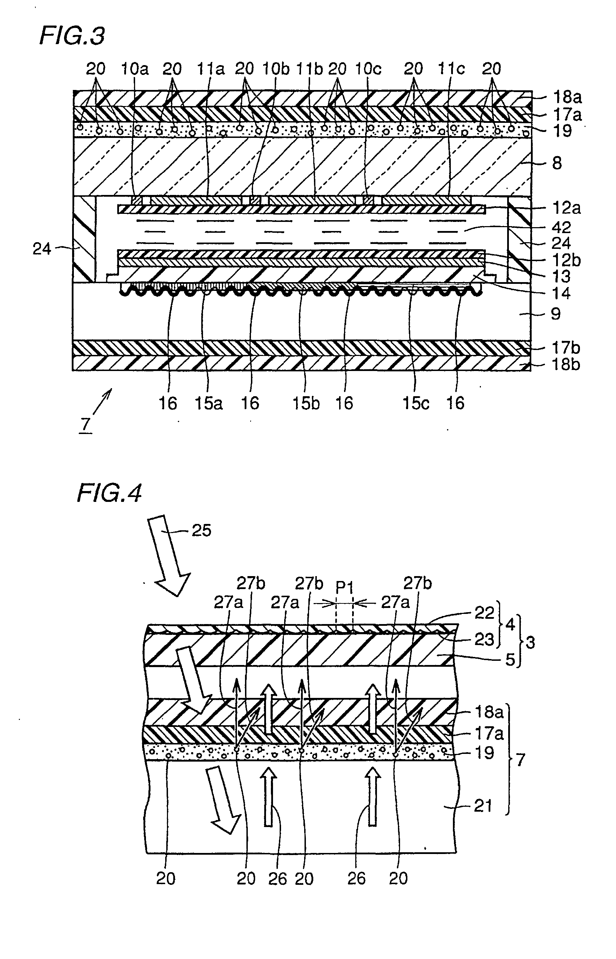

A liquid crystal panel 7 is used in LCD portion 2, as shown in Fig. 2. Liquid crystal panel 7 is held in a casing of mobile phone 1 formed of a front case 6 and a rear case (not shown). An opening is formed in front case 6 in a region above an emitting surface of liquid crystal panel 7 from which light is emitted. An in-molded part 3 is arranged to cover the opening. In-molded part 3 is formed of a plastic molded part 5 and an in-mold film 4 arranged on a surface of plastic molded part 5. In-mold film 4 is a multilayer film and, as shown in Fig. 4, includes a peel layer 23 located on a surface of plastic molded part 5 and an in-mold film top layer 22 located on peel layer 23. In-mold film top layer 22 includes an adhesion layer and a layer which is colored or has a graphic for a design painted thereon. In-molded part 3 is produced with a so-called in-mold method.

An active matrix type liquid crystal panel is applied as liquid crystal panel 7 to obtain high display quality. A structure of the active matrix type liquid crystal panel 7 applied to the mobile phone of the present invention will be described with reference to Fig. 3.

Referring to Fig. 3, liquid crystal panel 7 is a semipermeable type color liquid crystal panel. In liquid crystal panel 7, a substrate 8 as a first substrate of a transparent material such as glass having an element such as a thin film field effect transistor, a switching element for controlling a display at each pixel of a liquid crystal, formed on its surface and a CF substrate 9 as a second substrate having color filters 15a-15c arranged on a surface thereof, are arranged opposite to each other to sandwich a liquid crystal 42 therebetween. A switching element, data lines 10a-10c which are conductive lines for controlling the switching element, and transparent electrodes 11a-11c for applying an electric field to liquid crystal 42 are arranged on a surface of substrate 8 that faces liquid crystal 42. An orientation film 12a is formed on surfaces of data lines 10a-10c and transparent electrodes 11a-11c that face liquid crystal 42.

A reflection film 16 for reflecting light incoming from the emitting surface of liquid crystal panel 7 is formed on a surface of CF substrate 9 that faces liquid crystal 42. Color filters 15a-15c are arranged on reflection film 16. Color filters 15a-15c are the filters of red, green and blue colors, respectively. An overcoat film 14 is arranged on color filters 15a-15c. A transparent electrode 13 as an opposite electrode is arranged on overcoat film 14. An orientation film 12b is arranged on transparent electrode 13.

Liquid crystal 42 is held between orientation films 12a and 12b. In addition, a seal material 24 for holding liquid crystal 42 is arranged between substrate 8 and CF substrate 9.

A phase difference plate (λ/4 plate) 17a is fixed on a surface of the emitting surface side of the substrate 8 in liquid crystal panel 7 with an adhesion layer 19 as a diffusion member interposed therebetween. In adhesion layer 19, a filler 20 as a light diffusion material is arranged dispersed in an adhesive as a base material. Any member that can diffuse light may be used as filler 20. Herein, the light diffusion material in a powder or a particle form is arranged as filler 20 dispersed in the adhesive.

A polarizer 18a is arranged on phase difference plate 17a. In addition, a phase difference plate (λ/4 plate) 17b is fixed on that surface of CF substrate 9, which is opposite to the surface facing liquid crystal 42, with an adhesion layer (not shown) interposed therebetween. A polarizer 18b is arranged on that surface of phase difference plate 17b which is opposite to the surface facing CF substrate 109.

A mechanism of displaying an image and the like on LCD portion 2 of mobile phone 1 will be described with reference to Fig. 4.

Referring to Fig. 4, in LCD portion 2 (see Fig. 1) of mobile phone 1 (see Fig. 1), an incident light 25 which enters liquid crystal panel 7 via in-molded part 3 comes into liquid crystal panel 7 from the emitting surface of liquid crystal panel 7 (the surface facing in-molded part 3). Incident light 25 is then reflected by reflection film 16 (see Fig. 3) on a substrate portion 21 of liquid crystal panel 7. The reflected light 26 proceeds from substrate portion 21 through adhesion layer 19, phase difference plate 17a and polarizer 18a, and is emitted from the emitting surface of liquid crystal panel 7. Reflected light 26 then exits the LCD portion 2 of mobile phone 1 via in-molded part 3. Reflected light 26 is colored by color filters 15a-15c. Furthermore, an optical property of liquid crystal 42 can vary by altering a potential of each of transparent electrodes 11a-11c by the switching element to modify an intensity, a direction or the like of an electric field applied to liquid crystal 42. As a result, it is possible to switch between the states transmitting and not transmitting reflected light 26 of liquid crystal 42. Therefore, by controlling the switching element corresponding to each pixel so as to display a prescribed character or image, a prescribed character or image can be displayed on LCD portion 2.

As described above, reflected light 26 emitted from liquid crystal panel 7 has an intensity distribution corresponding to the pixel pitch of liquid crystal panel 7. In addition, the existence of adhesion layer 19 including filler 20 enables reflected light 26 to be diffused to some degree by adhesion layer 19 as a diffusion member. That is, as shown in Fig. 4, a part of reflected light 26 can be diffused by filler 20 included in adhesion layer 19 to be diffused light 27a and 27b. With this, a leveling of the intensity distribution corresponding to the pixel pitch of liquid crystal panel 7 is possible for reflected light 26. Thus, in the portion of in-molded part 3 as the window member which transmits reflected light 26, if an inequality with a pitch P1 similar to the pixel pitch is formed on peel layer 23 of in-mold film 4 constructing in-molded part 3, an interference of reflected light 26 with the inequality of peel layer 23 as mentioned above can be suppressed. Therefore, as the generation of the so-called glare can be prevented, degradation of display quality of LCD portion 2 of mobile phone 1 can be prevented.

In addition, as shown in Figs. 1-4, the generation of glare can be suppressed even when in-molded part 3 having a high degree of freedom in designing is used as the window member. Therefore, the degree of freedom in designing mobile phone 1 can be enhanced while keeping high display quality of LCD portion 2 in mobile phone 1 by using in-molded part 3 as the window member.

In addition, a light diffusion property of adhesion layer 19 can be changed arbitrarily by modifying a size of filler 20 as the light diffusion material dispersed in the adhesive as the base material, and a distribution density of filler 20 in the adhesive. With this, in LCD portion 2 of mobile phone 1, an optical property (a light diffusion property) of adhesion layer 19 can be set to diffuse reflected light 26 emitted from liquid crystal panel 7 so as to decrease the glare without degrading the high display quality of active matrix type liquid crystal panel 7.

It is to be noted that, in liquid crystal panel 7, the distribution density of filler 20 is adjusted such that a haze value of adhesion layer 19 as the diffusion member becomes 52 %. Herein, a preferred haze value of adhesion layer 19 is between 50 % and 60 %.

In this example, if the haze value of adhesion layer 19 is in the range mentioned above, the generation of the glare can surely be prevented by appropriately diffusing reflected light 26 emitted from liquid crystal panel 7 while maintaining the high display quality of the active matrix type liquid crystal panel 7 in LCD portion 2 of mobile phone 1.

In addition, adhesion layer 19 as the diffusion member is interposed between substrate 8 as the first substrate and phase difference plate 17a as the optical member, and has a function to fix phase difference plate 17a on substrate 8. Thus, adhesion layer 19 as the diffusion member is a member constructing liquid crystal panel 7. Therefore, except for liquid crystal panel 7, it is unnecessary to significantly modify the design of the members, such as the casing, of mobile phone 1 integrating liquid crystal panel 7. Using liquid crystal panel 7 according to the present invention as shown in Fig. 3, the design of the members, such as the casing, of the conventional mobile phone can easily be applied to the mobile phone 1 of the present invention. Consequently, a designing time period for the members such as the casing of mobile phone 1 can be shortened according to the present invention, so that the production cost of mobile phone 1 of the present invention is not increased.

In addition, adhesion layer 19 also exists in the conventional liquid crystal panel shown in Fig. 13. Thus, the shape of the liquid crystal panel 7 similar to that of the conventional one can be attained by adding a function of a diffusion member to the existing adhesion layer 19 by adding filler 20 thereto. As a result, except for liquid crystal panel 7 of mobile phone 1, almost the same members as the conventional ones can be used. Therefore, the designing cost of mobile phone 1 according to the present invention can further be decreased.

### (Second Embodiment)

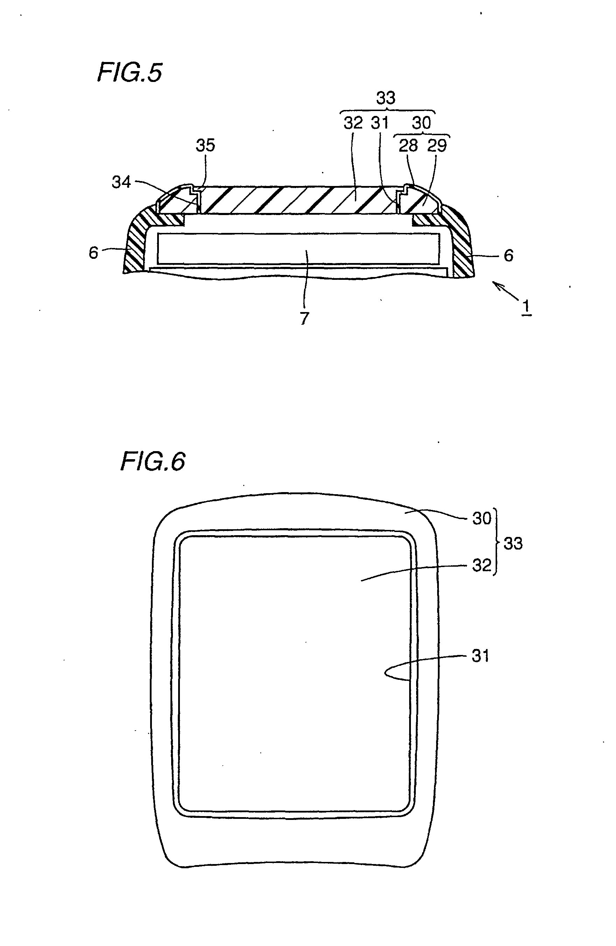

A second embodiment of the mobile phone according to the present invention will be described with reference to Figs. 5-7. Fig. 5 corresponds to Fig. 2.

Referring to Figs. 5-7, the mobile phone basically has the same structure as the mobile phone in the first embodiment of the present invention. In the mobile phone in the first embodiment of the present invention, however, in-molded part 3 is arranged as the window member on the emitting surface of liquid crystal panel 7. In mobile phone 1 shown in Figs. 5-7, an LCD window member 33 formed of an acrylic plate 32 as a window member and a frame-shaped in-molded part 30 as a frame member is arranged on the emitting surface of liquid crystal panel 7. An opening 31 is formed in in-molded part 30. In-molded part 30 is formed of a frame-shaped plastic molded part 29 and an in-mold film 28 arranged on a surface of plastic molded part 29. Acrylic plate 32 is secured fitted to opening 31 of in-molded part 30. A convex portion 34 for securing acrylic plate 32 is formed on opening 31 of in-molded part 30. A concave portion 35 corresponding to this step portion 34 is also formed on acrylic plate 32. Acrylic plate 32 is secured to in-molded part 30 by press-fixing concave portion 35 of acrylic plate 32 to convex portion 34 of in-molded part 30. Acrylic plate 32 is a single layer of transparent material without any other film formed on the surface thereof. A liquid crystal panel having a structure similar to that of the conventional liquid crystal panel shown in Fig. 13 is used as liquid crystal panel 7.

As described above, light emitted from the emitting surface of liquid crystal panel 7 (i.e., reflected light 26 (see Fig. 4)) has an intensity distribution corresponding to the pixel pitch of liquid crystal panel 7. In addition, in mobile phone 1 as a liquid crystal display device shown in Figs. 5 and 6, the region in acrylic plate 32 as the window member that transmits light emitted from the emitting surface of liquid crystal panel 7 is formed of a single layer of transparent material. That means, this region in acrylic plate 32 does not have a multilayer structure as in-molded part 30 in which in-mold film 28 is arranged on a surface of plastic molded part 29. Because of the absence of the in-mold film including the inequality on the surface of acrylic plate 32, there is no phenomenon such as an interference of the light emitted from the emitting surface of liquid crystal panel 7 with such inequality. This surely prevents the generation of the so-called glare.

Furthermore, as in-molded part 30 as the frame member is included besides acrylic plate 32 as the window member, the degree of freedom in designing mobile phone 1 can be enhanced by arbitrarily changing the design of in-molded part 30 while keeping the good display property of LCD portion 2.

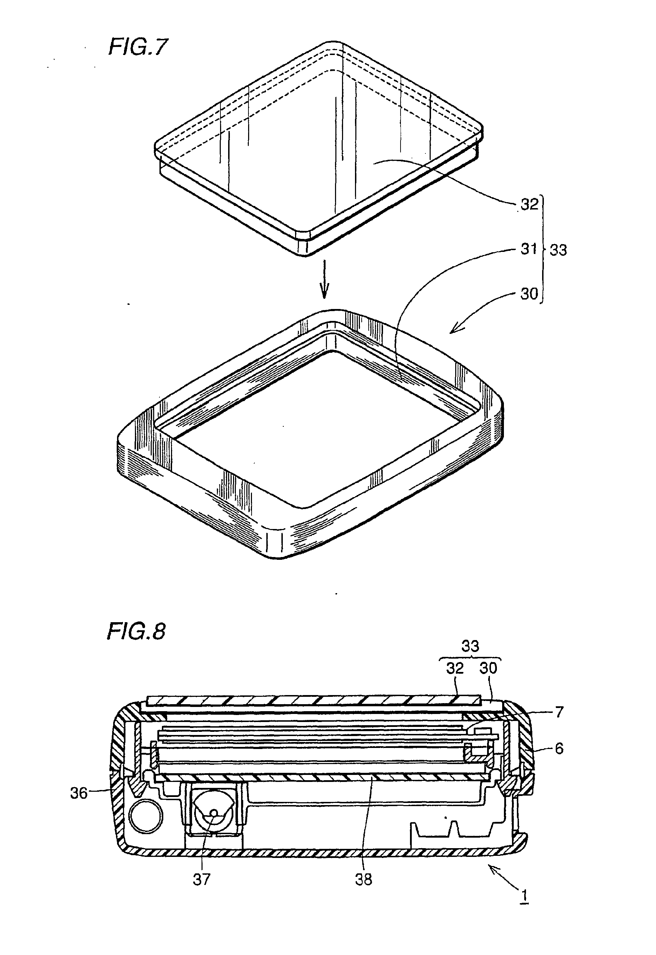

Fig. 8 corresponds to Fig. 5, but a whole cross section of the mobile phone is shown in Fig. 8. A first modification of the second embodiment of the mobile phone according to the present invention will be described with reference to Fig. 8.

Referring to Fig. 8, mobile phone 1 basically has the same structure as mobile phone 1 shown in Figs. 5-7. In mobile phone 1 shown in Fig. 8, however, concave portion 35 as shown in Fig. 5 is not formed on acrylic plate 32 constructing LCD window member 33. In mobile phone 1 shown in Fig. 8, the cross section of acrylic plate 32 is generally rectangular. Similar to acrylic plate 32 shown in Figs. 5-7, acrylic plate 32 is a single layer of transparent material without any other film formed on the surface thereof. An opening, to which acrylic plate 32 as such can be fit, is formed in in-molded part 30.

With such a structure, in addition to the similar effect as the mobile phone shown in Figs. 5-7 being obtained, the form of acrylic plate 32 can be simplified so that the production cost of the mobile phone can further be decreased.

It is to be noted that, as shown in Fig. 8, mobile phone 1 includes a front case 6 and a rear case 36 constructing a casing. Members such as liquid crystal panel 7, a substrate 38 having a control circuit and the like mounted thereon, and a motor 37 for generating a vibration to notice an incoming call, are arranged inside the casing formed of front case 6 and rear case 36.

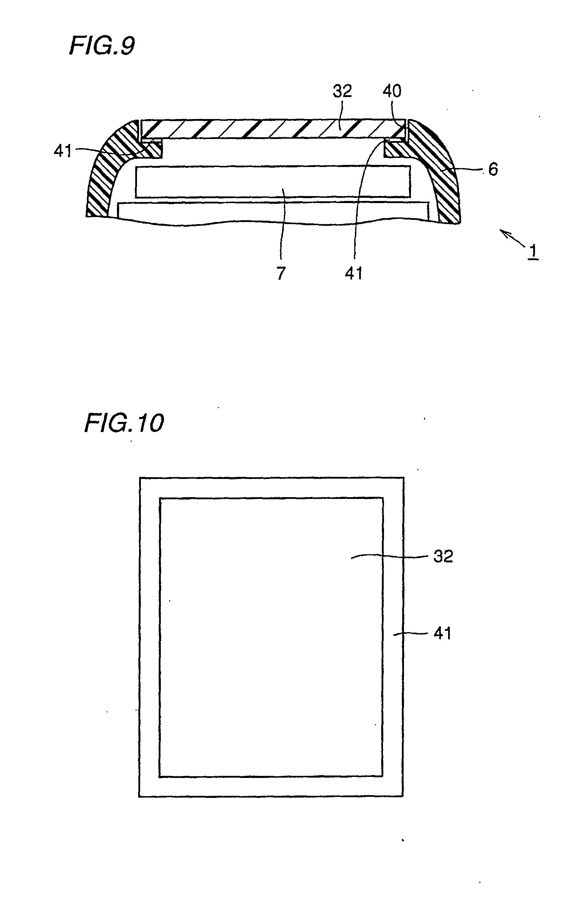

A second modification of the second embodiment of the mobile phone according to the present invention will be described with reference to Figs. 9 and 10. Fig. 9 corresponds to Fig. 5.

Referring to Figs. 9 and 10, mobile phone 1 basically has the same structure as mobile phone 1 shown in Figs. 5-7. In the region located above the emitting surface of liquid crystal panel 7, however, an opening 40 is formed in front case 6 as the casing. Acrylic plate 32 formed of a single layer of transparent material is arranged to cover opening 40. The region of acrylic plate 32 as the window member which is located above the emitting surface of liquid crystal panel 7 is the region to transmit light emitted from liquid crystal panel 7. Other film or the like is not formed on the surface of acrylic plate 32 in this region, just as acrylic plate 32 shown in Figs. 5-7.

On the outer circumference of acrylic plate 32, a silk screen print layer 41 as a colored layer having a prescribed color, character, pattern and the like formed thereon is formed on the back surface of acrylic plate 32.

In this example, because of the absence of the in-mold film including the inequality on the surface of acrylic plate 32 as the mobile phone shown in Figs. 5-7, there is no phenomenon such as an interference of the light emitted from the emitting surface of liquid crystal panel 7 with such inequality. This surely prevents the generation of the so-called glare.

In addition, comparing with mobile phone 1 shown in Figs. 5-7, the structure of mobile phone 1 can further be simplified because in-molded part 30 as the frame member is unnecessary. This can decrease the production cost of mobile phone 1.

Furthermore, an arbitrary design can be provided to acrylic plate 32 as the window member by forming silk screen print layer 41 of an arbitrary color and form on acrylic plate 32. As a result, the degree of freedom in designing mobile phone 1 can be ensured to some extent.

It should be noted that, though the mobile phone is shown as the liquid crystal display device in the first and second embodiments of the present invention, the present invention can be applied to various equipment using a liquid crystal panel, for example, equipment utilizing a liquid crystal panel in a display portion such as a personal digital assistant or a notebook computer, as well as a liquid crystal display device of a personal computer or a liquid crystal television.

Though the embodiments of the present invention have been described above, features of each embodiment may be combined appropriately. In addition, the embodiments disclosed herein are by way of illustration in all points and should not be taken by way of limitation. The scope of the present invention is indicated not by the above-mentioned embodiments but by the appended claims, and it is intended to encompass all modifications falling within the equivalent spirit and scope of the appended claims.

### Industrial Applicability

A liquid crystal display device according to the present invention is applicable not only to a mobile phone but also to the field of electronic equipment including a display portion for displaying text information, images and the like.

## Claims

1. A liquid crystal display device, comprising:
an active matrix type liquid crystal panel (7) holding liquid crystal (42);
a window member (3) located on said liquid crystal panel (7) and transmitting light (26, 27a, 27b) emitted from said liquid crystal panel (7); and
a diffusion member (19) located between liquid crystal (42) of said liquid crystal panel (7) and said window member (3) and diffusing light (26) emitted from said liquid crystal (42).

2. The liquid crystal display device according to claim 1, wherein said diffusion member (19) includes
a base material capable of transmitting light, and
a light diffusion material (20) arranged dispersed in said base material.

3. The liquid crystal display device according to claim 1, wherein said liquid crystal panel (7) includes
first and second substrates (8, 9) holding said liquid crystal, said first substrate (8) being located on an emitting surface side of said liquid crystal panel (7) that emits light, while said second substrate (9) being located in a region at a larger distance from said emitting surface than said first substrate (8) when seen from said liquid crystal (42), and
an optical member (17a) arranged on that surface of said first substrate (8) which is opposite to the surface facing said liquid crystal (42); and
said diffusion member (19) is located between said first substrate (8) and said optical member (17a).

4. The liquid crystal display device according to claim 3, wherein said diffusion member (19) is an adhesion layer adhering said optical member (17a) to said first substrate (8).

5. The liquid crystal display device according to claim 1, wherein a haze value of said diffusion member (19) is between 50 % and 60 %.

6. An active matrix type liquid crystal panel (7) holding liquid crystal (42), comprising:
first and second substrates (8, 9) holding said liquid crystal (42), said first substrate (8) being located on an emitting surface side of said liquid crystal panel (7) that emits light, while said second substrate (9) being located in a region at a larger distance from said emitting surface than said first substrate (8) when seen from said liquid crystal (42);
an optical member (17a) arranged on that surface of said first substrate (8) which is opposite to the surface facing said liquid crystal (42); and
a diffusion member (19) located between said first substrate (8) and said optical member (17a).

7. The liquid crystal panel according to claim 6, wherein
said diffusion member (19) includes
a base material capable of transmitting light, and
a light diffusion material (20) arranged dispersed in said base material.

8. The liquid crystal panel according to claim 6, wherein
said diffusion member (19) is an adhesion layer adhering said optical member (17a) to said first substrate (8).

9. The liquid crystal panel according to claim 6, wherein
a haze value of said diffusion member (19) is between 50 % and 60 %.

10. A liquid crystal display device, comprising:
an active matrix type liquid crystal panel (7);
a frame member (30) located on said liquid crystal panel (7) and having an opening (31) formed in a region located above an emitting surface of said liquid crystal panel (7) that emits light; and
a window member (32) located to cover opening (31) of said frame member (30) and transmitting light emitted from the emitting surface of said liquid crystal panel (7); wherein
said window member (32) has a region that transmits light emitted from the emitting surface of said liquid crystal panel, said region being formed of a single layer of transparent material.

11. A liquid crystal display device, comprising:
an active matrix type liquid crystal panel (7);
a casing (6) arranged to surround said liquid crystal panel (7) and having an opening (40) formed in a region facing an emitting surface of said liquid crystal panel that emits light; and
a window member (32) located to cover opening (40) of said casing (6) and transmitting light emitted from the emitting surface of said liquid crystal panel (7); wherein
said window member (32) has a region that transmits light emitted from the emitting surface of said liquid crystal panel, said region being formed of a single layer of transparent material.

12. The liquid crystal display device according to claim 11, wherein said window member (32) includes a colored layer (41) formed on a surface of a region other than the region that transmits light emitted from the emitting surface of said liquid crystal panel (7).
